# EUROPÄISCHE PATENTSCHRIFT

(11) **EP 1 192 301 B1**
(45) Veröffentlichungstag und Bekanntmachung des Hinweises auf die Patenterteilung: **18.02.2004**
(21) Anmeldenummer: 00949198.6
(22) Anmeldetag: 21.06.2000
(51) Int. Cl.: D01D 5/098, D01D 4/02

(54) **VERFAHREN UND VORRICHTUNG ZUR HERSTELLUNG VON IM WESENTLICHEN ENDLOSEN FEINEN FÄDEN**
METHOD AND DEVICE FOR THE PRODUCTION OF AN ESSENTIALLY CONTINUOUS FINE THREAD
PROCEDE ET DISPOSITIF POUR PRODUIRE DES FILS FINS SENSIBLEMENT CONTINUS

(30) Priorität: 24.06.1999 DE 19929709
(43) Veröffentlichungstag der Anmeldung: 03.04.2002
(73) Patentinhaber: Gerking, Lüder, Dr.-Ing., D-14195 Berlin (DE)
(72) Erfinder: Gerking, Lüder, Dr.-Ing., D-14195 Berlin (DE)
(74) Vertreter: Pfenning, Meinig & Partner GbR
(86) Internationale Anmeldenummer: PCT/EP2000/005703
(87) Internationale Veröffentlichungsnummer: WO 2001/000909

(56) Entgegenhaltungen:
- EP-A- 0 339 240
- EP-A- 0 724 029
- WO-A-92/10599

## Beschreibung

Die Erfindung betrifft ein Verfahren zur Herstellung von sehr feinen Fäden aus schmelzspinnbaren Polymeren und eine Vorrichtung zu ihrer Herstellung.

Derartige Mikrofäden, meistens allerdings Mikrofasern endlicher Länge, werden nach einem Heißluft-Blasspinnverfahren, sog. Meltblown-Verfahren, seit vielen Jahren hergestellt, und es gibt heute unterschiedliche Vorrichtungen hierfür. Gleich ist allen, daß neben einer Reihe von Schmelzebohrungen - auch mehrere Reihen parallel zueinander sind bekannt geworden - Heißluft austritt, die die Fäden verzieht. Durch Vermischung mit der kälteren Umgebungsluft kommt es zur Abkühlung und Erstarrung dieser Fäden bzw. Fasern, denn oft, meistens zwar unerwünscht, reißen die Fäden. Der Nachteil dieser Meltblown-Verfahren ist der hohe Energieaufwand zur Erwärmung der mit hoher Geschwindigkeit strömenden Heißluft, ein begrenzter Durchsatz durch die einzelnen Spinnbohrungen (auch wenn diese im Laufe der Zeit zunehmend dichter gesetzt wurden bis zu einem Abstand von unter 0,6 mm bei 0,25 mm im Lochdurchmesser), daß es bei Fadendurchmessern unter 3µm zu Abrissen kommt, was zu Perlen und abstehenden Fasern im späteren textilen Verbund führt, und daß die Polymere durch die zur Erzeugung feiner Fäden notwendige hohe Lufttemperatur deutlich über der Schmelzetemperatur thermisch geschädigt werden. Die Spinndüsen, von denen eine große Anzahl vorgeschlagen und auch geschützt worden sind, sind aufwendige Spritzwerkzeuge, die in hoher Präzision gefertigt werden müssen. Sie sind teuer, betrieblich anfällig und in der Reinigung aufwendig.

Der vorliegenden Erfindung liegt daher die Aufgabe zugrunde, ein Verfahren und eine Vorrichtung zur Herstellung von im Wesentlichen endlosen Fäden zu schaffen, die einen geringeren Energieaufwand benötigen, keine Fadenschädigungen aufgrund zu hoher Temperatur bewirken und ein Spinnwerkzeug mit einfachem Aufbau verwenden.

Diese Aufgabe wird erfindungsgemäß durch die Merkmale der unabhängigen Ansprüche gelöst.

Die vorliegende Erfindung vermeidet die Nachteile des Standes der Technik, indem Polymerschmelze aus Spinnbohrungen, die in einer oder mehreren parallelen Reihen oder Ringen angeordnet werden, in eine mit Gas, in der Regel mit Luft gefüllte, von der Umgebung getrennte Kammer bestimmten Druckes ausgepreßt wird, wobei die Fäden im schmelzflüssigen Zustand in ein Gebiet rascher Beschleunigung dieses Gases am Austritt aus der Kammer gelangen. Die auf dem Wege dorthin auf den jeweiligen Faden durch Schubspannung übertragenen Kräfte nehmen zu, sein Durchmesser verringert sich stark und der Druck in seinem noch flüssigen Inneren steigt umgekehrt proportional zu seinem Radius durch die Wirkung der Oberflächenspannung entsprechend stark an. Durch die Beschleunigung des Gases sinkt in strömungsmechanischer Gesetzmäßigkeit dessen Druck. Dabei sind die Bedingungen der Schmelzetemperatur, der Gasströmung und seiner raschen Beschleunigung so aufeinander abgestimmt, daß der Faden vor seiner Erstarrung einen hydrostatischen Druck in seinem Inneren erreicht, der größer ist als der umgebende Gasdruck, so daß der Faden platzt und sich in eine Vielzahl feiner Fäden aufteilt. Durch einen Spalt unten in der Kammer verlassen Fäden und Luft diese. Das Aufplatzen geschieht nach dem Spalt und unter sonst unveränderten Bedingungen überraschend stabil ortsfest an einem bestimmten Punkt. Im Bereich der starken Beschleunigung verlaufen Gas- und Fadenströmung parallel, wobei die Strömungsgrenzschicht um die Fäden laminar ist. Es gelingt eine fortgesetzte Aufspleißung des ursprünglichen Fadenmonofils ohne Perlenbildung und Abrisse. Aus einem Monofil entsteht ein Multifil sehr viel feinerer Fäden unter Verwendung einer Gasströmung von Umgebungstemperatur oder etwas darüber liegenden Temperatur.

Die aus dem Aufspleißen entstandenen neuen Fäden sind erheblich feiner als das ursprüngliche Monofil. Sie können sogar noch etwas nach dem Aufspleißpunkt verzogen werden bis sie erstarrt sind. Dieses geschieht wegen der plötzlich geschaffenen größeren Fadenfläche sehr rasch. Die Fäden sind endlos. Es kann aber durch Abweichungen im Polymer, einzelne Geschwindigkeitsoder Temperaturstörungen, Staub im Gas und dergl. Störungen bei realen technischen Prozessen mehr in untergeordnetem Maße zu endlich langen Fäden kommen. Der Vorgang des Aufspleißens fadenbildender Polymere kann so eingestellt werden, daß die aus dem Monofil erzeugten zahlreichen sehr viel feineren Einzelfilamente endlos sind. Die Fäden haben einen Durchmesser von deutlich unter 10µm, vornehmlich zwischen 1,5 und 5 µm, was bei Polymeren einem Titer zwischen etwa 0,02 und 0,2 dtex entspricht und werden als Mikrofäden bezeichnet.

Das Gebiet der starken Beschleunigung und Druckabsenkung in der Gasströmung wird nach der Erfindung in Form einer Lavaldüse mit konvergenter Kontur zu einem engsten Querschnitt hin und dann rascher Erweiterung realisiert, letzteres schon damit die nebeneinander laufenden neu gebildeten Einzelfäden nicht an den Wänden anhaften können. Im engsten Querschnitt kann bei entsprechender Wahl des Druckes in der Kammer (bei Luft etwa doppelt so hoch wie der Umgebungsdruck dahinter) Schallgeschwindigkeit und im erweiterten Teil der Lavaldüse Überschallgeschwindigkeit herrschen.

Für die Herstellung von Fadenvliesen (Spinnvliesen) werden Spinndüsen in Zeilenform und Lavaldüsen mit Rechteckquerschnitt eingesetzt. Für die Herstellung von Garnen und für besondere Arten der Vliesstoffherstellung können auch Runddüsen mit einer oder mehreren Spinnbohrungen und rotationssymmetrische Lavaldüsen eingesetzt werden.

Das Verfahren nimmt Anleihe an Verfahren zur Herstellung von Metallpulvern aus Schmelzen, aus dem es sich entwickelt hat. Nach DE 33 11 343 zerplatzt das Metallschmelzemonofil im Bereich des engsten Querschnitts einer Lavaldüse in eine große Anzahl von Teilchen, die sich durch die Oberflächenspannung zu Kügelchen verformen und abkühlen. Auch hier kommt es zu einem die umgebende laminare Gasströmung überwiegenden Flüssigkeitsdruck im Inneren des Schmelzemonofils. Wenn die Druckabsenkung so rasch geschieht, daß es noch nicht in die Nähe der Erstarrung kommt, können die Druckkräfte die Kräfte des Zusammenhalts der Schmelzemasse, vorwiegend Zähigkeitskräfte, überwiegen und es tritt das Aufplatzen in eine Vielzahl von Filamentstücken (Ligamente) ein. Entscheidend ist dabei, daß der Faden zumindest im Inneren flüssig bleiben muß, damit dieser Mechanismus einsetzen kann. Daher wurde auch vorgeschlagen, das Monofil nach seinem Austritt aus der Spinndüse weiter zu beheizen.

Das selbsttätige Aufplatzen eines Metallschmelzefadens wird nach der dieses anwendenden Firma auch als 'NANOVAL-Effekt' benannt.

Ein Zerfasern durch Aufplatzen ist bei der Herstellung von Mineralfasern bekannt geworden, so in der Offenlegungsschrift DE 33 05 810. Durch Störung der Gasströmung in einem unterhalb der Spinndüse angeordneten Rechteckkanal mittels Einbauten, die Querströmungen erzeugen, kommt es nach dortiger Aussage zum Zerfasern des einzelnen Schmelzemonofils. In nicht ganz klarer Darstellung wird von einem Zerfasern durch statisches Druckgefälle in der Luftströmung gesprochen, und zwar in EP 0 038 989 vom Ausziehen aus einer 'Schlaufen- oder Zickzackbewegung ........ nach Art eines mehrfachen Peitschenknalleffekts'. Das das eigentliche 'Zerfasern' durch Zunahme des Druckes im Inneren des Fadens und Abnahme in der umgebenden Gasströmung seine Ursache hat, wurde nicht erkannt, auch keine Steuerungsmechanismen in diese Richtung.

Für Polymere hat man sich bei der gleichen anmeldenden Firma diese Erkenntnis von der Mineralfaserherstellung offenbar zunutze gemacht. In der Offenlegungsschrift DE 38 10 596 wird in einer Vorrichtung nach Fig. 3 und Beschreibung in Beispiel 4 der Schmelzestrom aus Polyphenylensulfid (PPS) 'durch ein hohes statisches Druckgefälle zerfasert'. Die Gasströme sind heiß, sogar über den Schmelzpunkt des PPS hinaus erhitzt. Ein statisches Druckgefälle in der Gasströmung, abnehmend in Fadenlaufrichtung, kann alleine den Faden nicht zerfasern. Es wurde nicht erkannt, daß dazu der Schmelzestrom zumindest in einem hinreichenden Teil in seinem Inneren flüssig bleiben muß. Durch die Anwendung von heißer Luft im Bereich der Polymerschmelzetemperatur ist das aber von selbst gegeben. Nicht ein 'im Anschluß an die Austrittsbohrungen einwirkendes Druckgefälle' Spalte 1, Zeilen 54/55 zieht die Schmelzeströme zu feinen Fasern aus, sondern ein statisches Druckgefälle zwischen Schmelzestrom und umgebender Gasströmung bringt ihn zum Aufspleißen oder Zerfasern. Die erzeugten Fäden sind endlich lang und amorph.

Die Fäden des erfindungsgemäßen Verfahrens sind dagegen endlos oder im Wesentlichen endlos. Sie werden durch gezielt gesteuertes Aufplatzen eines noch schmelzflüssigen Monofils in einer sie umgebenden laminaren Gasströmung erzeugt, also ohne Turbulenz erzeugende Querströmungen. Es kommen grundsätzlich alle fadenbildenden Polymere, wie Polyolefine PP, PE, Polyester PET, PBT, Polyamide PA 6 und PA 66 und andere wie Polystyrol in Frage. Dabei sind solche wie Polypropylen (PP) und Polyethylen (PE) als günstig anzusehen, weil Oberflächenspannung und Viskosität in einem Verhältnis stehen, das den Aufbau eines Fadeninnendruckes gegen die Oberflächenspannungskraft der Fadenhaut leicht gestattet, während die Viskosität nicht so hoch ist, daß das Zerplatzen verhindert wird. Das Verhältnis von Oberflächenspannung zu Zähigkeit läßt sich durch die Erhöhung der Schmelzetemperatur bei den meisten Polymeren erhöhen. Dies geschieht auf einfache Weise in der Schmelzeherstellung und kann durch Heizen der Spinndüsen kurz vor dem Austritt der Fäden verstärkt werden. Eine Aufwärmung der Fäden danach durch heiße Gasströme findet nach der vorliegenden Erfindung jedoch nicht statt.

Es kann festgestellt werden, daß der Gegenstand der Erfindung, das gesteuerte Aufspleißen eines mit kalter Luft verzogenen Polymerfadens in eine Vielzahl feinerer Einzelfäden endloser bzw. im Wesentlichen endloser Einzelfäden noch nicht gefunden wurde. Dieses geschieht durch den selbsttätigen Effekt des Zerplatzens des Schmelzefadens durch einen positiven Druckunterschied zwischen dem hydraulischen Druck im Faden, gegeben aus der Oberflächenspannung des Fadenmantels, und der ihn umgebenden Gasströmung. Wird der Druckunterschied so groß, daß die Festigkeit des Fadenmantels nicht mehr ausreicht, das Innere zusammenzuhalten, so platzt der Faden. Es kommt zum Aufspleißen in eine Vielzahl feinerer Fäden. Das Gas, meistens Luft, kann kalt sein, d.h. muß nicht aufgeheizt werden, nur müssen die Verfahrensbedingungen und die Vorrichtung so beschaffen sein, daß das Schmelzemonofil sich in seinem von der Schmelzeviskosität und der Oberflächenspannung des betreffenden Polymers abhängigen kritischen Durchmesser nicht so weit abgekühlt ist, daß es durch den sich aufladenden inneren Flüssigkeitsdruck nicht mehr platzen kann. Auch dürfen die Schmelzebohrungen durch das Gas nicht so stark abgekühlt werden, daß die Schmelze zu stark abkühlt, geschweige denn bereits dort erstarrt. Die verfahrenstechnischen und geometrischen Bedingungen zur Realisierung dieses Aufspleißeffektes sind verhältnismäßig einfach zu finden.

Der Vorteil der vorliegenden Erfindung liegt darin, daß auf einfache und sparsame Weise Feinstfäden im Bereich deutlich unter 10 µm, überwiegend zwischen 2 und 5 µm, erzeugt werden können, was beim reinen Verziehen beispielsweise durch das Meltblown-Verfahren nur mit heißen, über den Schmelzpunkt erhitzten Gas(Luft)-strahlen zu Wege gebracht wird und damit erheblich mehr Energie bedarf. Außerdem werden die Fäden in ihrer molekularen Struktur nicht durch Übertemperaturen geschädigt, was zu verringerter Festigkeit führen würde, wodurch sie sich aus einem textilen Verband dann oft herausreiben lassen. Ein weiterer Vorteil liegt darin, daß die Fäden endlos oder quasi endlos sind und aus einem textilen Verband wie einem Vlies nicht herausstehen und sich als Fusseln herauslösen lassen. Die Vorrichtung zur Verwirklichung des erfindungsgemäßen Verfahrens ist einfach. Die Spinnbohrungen der Spinndüse können größer und damit weniger störanfällig sein, der Lavaldüsenquerschnitt benötigt in seiner Genauigkeit nicht die engen Toleranzen der seitlichen Luftschlitze des Meltblowh-Verfahrens. Bei einem bestimmten Polymer braucht man nur die Schmelzetemperatur und den Druck in der Kammer aufeinander abzustimmen und bei gegebenem Durchsatz pro Spinnbohrung und der geometrischen Lage der Spinnbohrungen zur Lavaldüse kommt es zum Aufspleißen.

Ausführungsbeispiele der Erfindung sind in der Zeichnung dargestellt und werden in der nachfolgenden Beschreibung näher erläutert. Es zeigen
- Fig. 1: eine schematische Schnittdarstellung einer Vorrichtung zur Herstellung von Mikrofäden mittels kühlen Gasstrahlen durch Aufplatzen eines Schmelzestroms in eine Vielzahl von Einzelfäden nach einem ersten Ausführungsbeispiel der Erfindung,
- Fig. 2: eine perspektivische Teilansicht der erfindungsgemäßen Vorrichtung nach einem Ausführungsbeispiel mit Zeilendüse und Spinnbohrungen in Nippelform zur Herstellung von Vliesen aus Mikrofäden, und
- Fig. 3: eine Teilansicht im Schnitt der Spinndüse und der Lavaldüse nach einem dritten Ausführungsbeispiel der Erfindung.

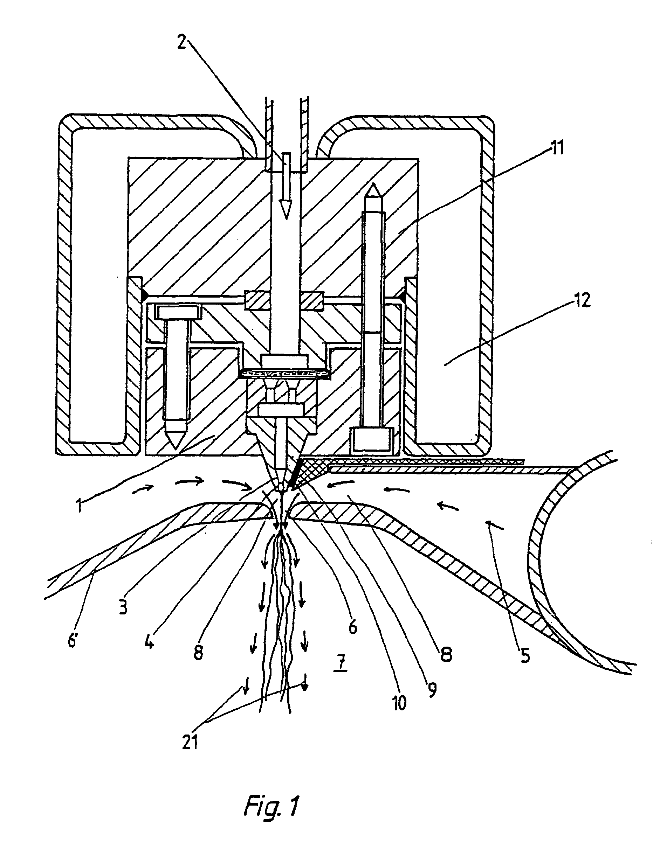

In Fig. 1 ist eine Vorrichtung zur Herstellung von im Wesentlichen endlosen feinen Fäden aus schmelzspinnbaren Polymeren dargestellt, die einen nicht näher beschriebenen Spinnkopf oder Spinnbalken 11 aufweist, in dem eine Spinndüse 1 aufgenommen ist. Der Spinnkopf 11 und die Spinndüse sind in allgemein bekannter Weise aus verschiedenen Teilen zusammengesetzt, so daß eine Beschreibung darüber weggelassen wird. Der Spinnkopf oder Spinnbalken 11 ist von einer Heizung 12 umgeben, die als Flüssig- oder Dampfheizung über Kammern oder auch als elektrische Bandheizung ausgebildet ist. Der Spinnkopf oder Spinnbalken ist mit nicht dargestellten schmelzedosierenden Geräten, wie Spinnpumpen und Extruder verbunden, bei denen es sich um die üblichen Einrichtungen zur Herstellung von Synthesefasern handelt, so daß auch diese nicht weiter beschrieben sind.

Die Spinndüse weist ein Düsenmundstück 3 auf, das eine, aber üblicherweise mehrere in einer Reihe angeordneten Spinnbohrungen aufweist. Auch mehrere parallele Reihen sind möglich. Unterhalb des Spinnkopfes 11 befindet sich eine Platte 6' mit einem Spalt 6, der konvergent-divergent ausgebildet ist und sich durch einen unter ihm liegenden Raum 7 stark erweitert und eine Lavaldüse darstellt. Je nach Form der Spinndüse 1 ist die Lavaldüse 6 rotationssymmetrisch ähnlich einer Blende im Fall einer einzelnen Düse oder im Fall einer Zeilendüse als Längsspalt ausgebildet. Die Spinndüse bzw. die Spinnbohrungen der Spinndüse enden kurz über der Lavaldüse 6 oder in der Ebene der Platte 6', die Spinndüse 1 kann aber auch leicht in die Lavaldüse 6 hineinragen.

Zwischen Spinnkopf und Platte 6' liegt ein abgeschlossener Raum 8, dem entsprechend den Pfeilen 5 beispielsweise von einem Kompressor Gas zugeführt wird. Das Gas hat üblicherweise Umgebungstemperatur, kann aber auch aufgrund der Kompressionswärme von dem Kompressor eine etwas höhere Temperatur, beispielsweise 70 bis 80° aufweisen.

Das Düsenmundstück 3 ist von einer Isolieranordnung 9 umgeben, die das Düsenmundstück 3 vor zu großen Wärmeverlusten durch die Gasströmung 5 schützt. Zusätzlich kann zwischen Isolieranordnung 9 und Mundstück 3 eine elektrische Bandheizung 10 angeordnet sein.

Der Raum 7 weist üblicherweise Umgebungsdruck auf, während das Gas im Raum 8 unter einem erhöhten Druck gegenüber dem Raum 7 steht. Bei direkt anschließender Weiterverarbeitung zu Vlies oder anderen Fadenstrukturen kann der Raum 7 einen gegenüber Umgebungsdruck, d.h. Atmosphärendruck, etwas erhöhten Druck haben, beispielsweise um einige mbar, der für die Weiterverarbeitung, wie Vlieslegung oder andere Fadensammelvorrichtungen benötigt wird.

Die Polymerschmelze wird entsprechend dem Pfeil 2 aus dem Düsenmundstück 3 aus der Spinnbohrung oder - öffnung 4 als Schmelzemonofil ausgepreßt, wird von den Gasstrahlen 5 erfaßt und durch Schubspannungen an seinem Umfang zu geringeren Durchmessern verjüngt. Da die grundsätzlich kalten Gasströme, die Luftströme sein können, es abkühlen, muß es nach wenigen Millimetern in den engsten Bereich der Lavaldüse gelangen und somit in ein Gebiet geringeren Druckes. Sobald die Verjüngung so weit fortgeschritten ist und durch die Wirkung der Oberflächenspannung der Schmelze am Fadenmantel der Druck im Innern so weit angestiegen ist, daß er über dem der Gasströmung liegt, kommt es zum Aufplatzen des Monofils, nämlich dann, wenn der Fadenmantel den Schmelzefaden gegen den mit der Fadeneinschnüren gewachsenen Innendruck nicht mehr zusammenhalten kann. Das Schmelzemonofil teilt sich in Einzelfäden auf, die sich aufgrund der Temperaturdifferenz zwischen Schmelze und kaltem Gas bzw. Luft und der plötzlich stark angewachsenen Oberfläche der Einzelfäden bezogen auf die Fadenmasse rasch abkühlen. Es ist somit eine bestimmte Anzahl von sehr feinen im Wesentlichen endlosen Einzelfäden entstanden.

Aus der Natur derartiger Aufplatzvorgänge ähnlich Explosionen folgt, daß die Zahl der entstehenden Fäden nach dem Aufspleißpunkt, der beispielsweise 5 bis 25 mm unter Lavaldüse 6 liegen kann, nicht gleichbleibend sein kann. Wegen der kurzen Wegstrecke, die Faden und Gas miteinander bis zum Aufspleißpunkt zurücklegen, ist die Strömungsgrenzschicht um den Faden laminar. Bevorzugt wird auch die Luft von den Zuleitungen her möglichst laminar an das Gebiet der Aufspleißung herangeführt. Das hat den Vorteil der geringeren Strömungsverluste und damit des geringeren Energiebedarfs, die laminare Strömungen gegenüber turbulenten auszeichnen, aber auch einen gleichmäßigeren zeitlichen Verlauf des Aufspleißens, weil Störungen durch turbulente Änderungen fehlen. Die beschleunigte Strömung, wie sie in dem Querschnitt der Lavaldüse 6 vorliegt, bleibt laminar und kann sich sogar laminarisieren, wenn vorher eine gewisse Turbulenz vorherrschte.

Der weitere Vorteil des laminaren Ausziehens des Schmelzemonofils bis an den Aufspleißpunkt und auch über ihn hinweg führt zu einem Aufspleißen in gleichmäßigere Einzelfäden, weil größere Unterschiede in der Strömungsgeschwindigkeit und damit in der auf das Schmelzemonofil und entstandene Einzelfäden einwirkenden Schubspannung und im Druck der Gasströmung nicht vorhanden sind. Die Verteilung der Fadendurchmesser ist, wie sich überraschend gezeigt hat, sehr eng, z.B. können Propylenfäden hergestellt werden, deren Durchmesser sämtlich zwischen 2 und 4 µm liegen.

Wie schon oben ausgeführt wurde, nimmt die Geschwindigkeit der Gasströmung gemäß den Pfeilen 5 zur Spinnbohrung 4 hin und dann in der Lavaldüse 6 ständig zu. In dem engsten Querschnitt der Lavaldüse kann sie bis zur Schallgeschwindigkeit anwachsen, wenn das kritische Druckverhältnis, je nach Gas, erreicht ist, bei Luft liegt das Verhältnis zwischen dem Druck in der Kammer 8 und dem Raum 7 etwa bei 1,9.

Die Fäden bewegen sich entsprechend den Pfeilen 21 nach unten und können beispielsweise auf einem nicht dargestellten Band zu einem Vlies abgelegt werden oder anderweitig weiter behandelt werden.

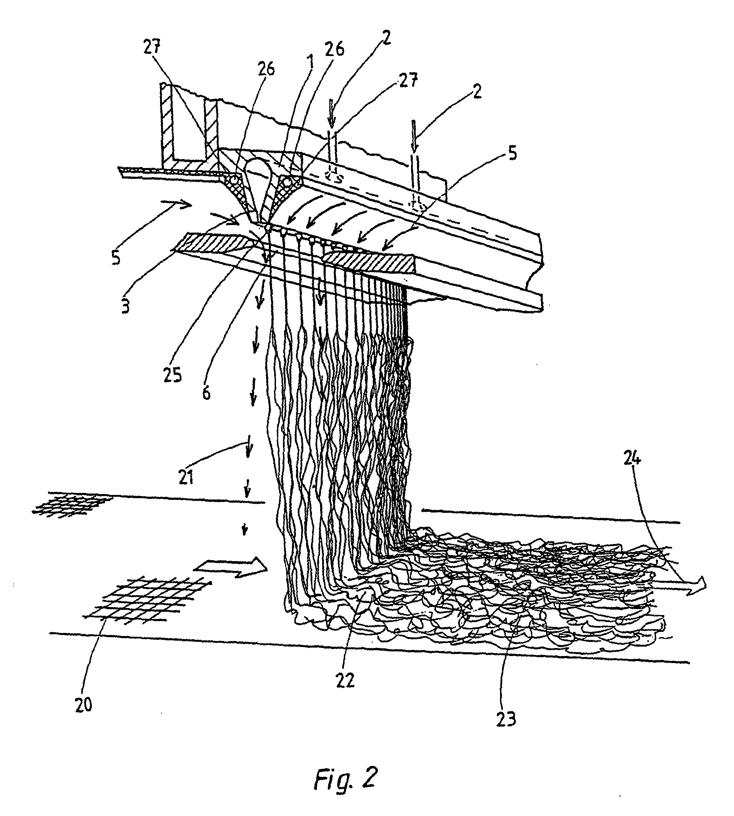

In Fig. 2 ist ein weiteres Beispiel der vorliegenden Erfindung dargestellt, bei dem die Spinndüse 1 als Zeilendüse ausgebildet ist. Dabei sind insbesondere die Auslaufstellen der Spinndüse 1 mit Mundstück 3 dargestellt, das Nippel 25 aufweist. Diese Form gestattet einen konzentrischen Zutritt des Gases an das Schmelzemonofil, was sich als vorteilhaft für die Aufspleißung, sowohl hinsichtlich der erzielbaren Feinheit der Fäden als auch hinsichtlich der Schwankungsbreite ihrer Durchmesser erwiesen hat.

Im Gegensatz zur Bandheizung 10 nach Fig. 1 sind hier runde Heizstäbe 26 zur Wärmezufuhr für das Düsenmundstück 3 gezeigt, das gegen die Gasströmung 5 durch Isolierstücke 27 abgedeckt ist. Die Fäden verlassen die Lavaldüse im breiten Vorhang gemeinsam mit dem Gas und bewegen sich gemäß den Pfeilen 21 auf ein Auffangband 20 zu und werden an dem Bereich 22 zu einem Vlies 23 abgelegt. Das Vlies 23 verläßt entsprechend Pfeil 24 das Gebiet seiner Herstellung.

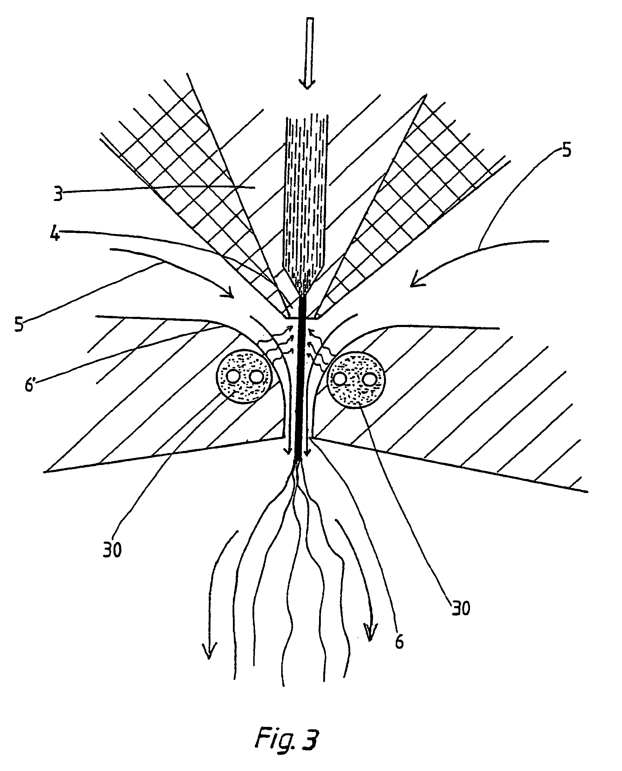

Eine weitere Ausführungsform der Spinn- und Aufspleißvorrichtung entsprechend der Erfindung ist in Fig. 3 dargestellt. Hier wird wiederum aus einem isolierten Düsenmundstück 3 mit einer oder mehreren Schmelzebohrungen 4 das Schmelzemonofil ausgestoßen und von der seitlich angreifenden Gasströmung 5 erfaßt und durch Schubspannungskräfte in die Länge zu dünneren Durchmessern verzogen. In der Platte 6' ist im Bereich der Lavaldüse 6 eine Heizvorrichtung 30 eingearbeitet. Auf dem Weg zum engsten Querschnitt der Lavaldüse 6 erhält somit das Schmelzemonofil durch Strahlung Wärme zugeführt. Dadurch wird die Abkühlung durch die grundsätzlich kalten Luft/Gasströme verzögert. Das Schmelzemonofil gelangt, auf geringeren Durchmesser verzogen, in das Unterdruckgebiet der Lavaldüse 6 und kann in noch feinere Einzelfäden aufspleißen.

Die folgenden Beispiele erläutern Verfahren und Vorrichtungen mit den bei verschiedenen Rohstoffen angewendeten wesentlichen Verfahrensdaten und den Fadenergebnissen.

### Beispiel 1

Über einen Laborextruder (Schnecke mit einem Durchmesser von 19 mm und L/D = 25) für die Verarbeitung von Polymeren wurde Polypropylen (PP) mit einem MFI (Meltflow index) von 25 (230°C, 2,16 kg) aufgeschmolzen und über eine Zahnradspinnpumpe einem Spinnkopf mit einem Düsenmundstück 3, welches 7 Bohrungen 4 in einer Reihe im gleichen Abstand von jeweils 4,5 mm angeordnet mit einem Durchmesser der Bohrungen 4 von 1 mm aufwies, zugeführt. Die schmelzeführenden Leitungen waren durch elektrische Bandheizungen von außen beheizt. Das Düsenmundstück 3 war nach Fig. 1 an seinen Flanken durch ein keramisches Isolierstück 9 (Kalziumsilikat) gegenüber der Gasströmung darunter isoliert und mittels elektrischen Heizungen beheizt. Unterhalb der Spinndüse 1 befand sich die Kammer 8 für die Gaszufuhr. Als Gas wurde in diesem und in den anderen Beispielen Luft genommen, welche aus einem Preßluftnetz entnommen und von einem Verdichter in dieses eingespeist wurde. Die Kammer 8 war nach unten begrenzt durch eine Platte, die einen die Lavaldüse 6 bildenden Schlitz von 4 mm Breite an ihrem engsten Querschnitt hatte. Die seitlichen Zuführquerschnitte für die Luft in der Kammer hatten eine Höhe von 32 mm, gemessen von der Oberkante der Lavaldüsenplatte 6'. Die Austrittsöffnungen der Bohrungen 4 waren genau in Höhe der Oberkante der Lavaldüsenplatte 6' angeordnet und hatten einen Abstand von 10 mm von dem engsten Querschnitt der Lavaldüse 6.

Schmelzedruck und -temperatur zwischen Spinnpumpe und Anschlußstück an die Spinndüse 1 wurden mit einem DMS-Druckmeßgerät (Dynisco, Typ MDA 460) bzw. einem Thermoelement gemessen.

Die Charakterisierung der erhaltenen Fäden erfolgt durch den aus 20 Einzelmessungen gemittelten Fadendurchmesser d₅₀, falls benötigt auch durch die Standardabweichung s.

Die Aufspleißung wird gekennzeichnet durch die theoretische Fadenzahl N. Diese gibt an, wieviele Einzelfilamente des gemessenen mittleren Fadendurchmessers d₅₀ sich mit der maximal möglichen Geschwindigkeit durch den engsten Querschnitt der Lavaldüse 6 bewegen müssen, um die gemessene Schmelzemasse in Einzelfilamente umzusetzen. Die maximal mögliche Geschwindigkeit ist die Gasgeschwindigkeit im engsten Querschnitt der Lavaldüse 6, welche entweder die aus den Bedingungen in der Kammer 8 berechenbare Schallgeschwindigkeit ist oder, falls das kritische Druckverhältnis, welches zum Erreichen der Schallgeschwindigkeit benötigt wird, nicht erreicht wird, aus diesen Bedingungen mit der Formel von Saint-Venant und Wantzell berechnet werden kann. Liegt die theoretische Fadenzahl N über 1, kann der beobachtete Fadendurchmesser nicht durch bloßes Verziehen entstanden sein, dies würde dem Gesetz von der Erhaltung der Masse widersprechen. Für die beobachteten deutlich über 1 liegenden theoretischen Fadenzahlen N kommt als Erklärung nur noch ein Aufspleißen in Frage. Ein mehrfacher Peitschenknalleffekt kann vielleicht Werte knapp über 1 bis 10 erklären, nicht aber die beobachteten Werte bis zu 627. Da die tatsächliche Fadengeschwindigkeit unter der maximalen liegen muß, wird die tatsächlich erhaltene Einzelfilamentanzahl über der theoretischen liegen.

Bei einer Schmelzetemperatur von 340°C und einem Schmelzedruck zwischen Spinnpumpe und Anschlußstück an die Spinndüse 1 von etwa 1 bar über dem Druck in der Kammer 8, was etwa auch der Druck vor den Spinnkapillaren war, und einer über die Spinnpumpe zudosierten Menge von 43,1 g/min, also 6,2 g/min x Loch, ergaben sich die folgenden Fadenwerte bei den verschiedenen Drücken in der Kammer 8 über dem Atmosphärendruck in Raum 7:

| | |
|---|---|
| 0,25 bar | d₅₀=7,6 µm, N=123 |
| 0, 5 bar | d₅₀=4,4 µm, N=276 |
| 1, 0 bar | d₅₀=3,9 µm, N=283 |

Werden pro Bohrung 4 statt 6,2 g/min nur 4,6 g/min durchgesetzt, wird bei einem Druck in der Kammer 8 von 0,5 bar ein d₅₀ von 3,0 µm anstatt 4,4 µm erreicht.

Wie wichtig eine genaue Abstimmung von Schmelzetemperatur, Schmelzemenge und Gasströmung ist, zeigt das folgende Beispiel für eine Abstand der Bohrungen 4 von 15 mm, einen Durchsatz pro Bohrung 4 von 4,6 g/min und einen Druck in der Kammer 8 von 0,5 bar:

| | |
|---|---|
| Schmelzetemperatur 340°C | d₅₀=3,0µm, s=0,8µm, N=187 |
| Schmelzetemperatur 305°C | d₅₀=8,2µm, s=4,7µm, N=25. |

Offensichtlich ist es so, daß sich um die Monofilamente schon ein kalter Mantel gebildet hat, der ein Aufspleißen stark behindert. Es wird nicht das gesamte Monofil aufgespalten, sondern nur ein Teil, was daran zu erkennen ist, daß zwar der minimal beobachtete Fadendurchmesser sich nicht verändert hat (einige spleißen also auf), nun aber auch einige Einzelfilamente mit einem Durchmesser von mehr als 10 µm auftreten. Dort ist dann kein Spleißen eingetreten. Bei der höheren Temperatur dagegen liegen alle Einzelfilamente zwischen 1,6 µm und 4,8 µm. Die größere Streuung der Fadendurchmesser findet ihren Niederschlag in der deutlich größeren Standardabweichung.

Eine Ausführung des Mundstückes 3 mit Nippeln 25 gemäß Fig. 2 erlaubt die Herstellung deutlich feinerer Fäden mit kleinerer Schwankungsbreite und/oder eine deutliche Durchsatzsteigerung. So wurden für eine Temperatur von 370°C, einen Abstand der Bohrungen 4 von 15 mm, einen Abstand der Austrittsöffnungen der Bohrungen 4 vom engsten Querschnitt der Lavaldüse von 8,5 mm (die Auslauföffnungen tauchen 1,5 mm in die gedachte Ebene der Lavaldüsenplatte ein) und einen Druck in der Kammer 8 von 0,75 bar die folgenden Fadenwerte erhalten:

| | |
|---|---|
| 6,2 g/min x Loch | d₅₀=2,1µm, s=0,30µm, N=445 |
| 12,3 g/min x Loch | d₅₀=2,5µm, s=0,60µm, N=627. |

### Beispiel 2

Mit der Einrichtung aus Beispiel 1 wurde Polyamid 6 (PA6) mit einer relativen Viskosität ηᵣₑₗ = 2,4 einem Düsenmundstück 3 mit 58 Bohrungen 4 im abstand von 1,5 mm und einem Durchmesser von 0,4 mm zugeführt. Der Abstand der Austrittsöffnungen der Bohrungen 4 vom engsten Querschnitt der Lavaldüse war 12,0 mm (die Auslauföffnungen endeten 2,0 mm oberhalb der gedachten Ebene der Lavaldüsenplatte). Mit einem Durchsatz pro Bohrung 4 von 0,25 g/min und einem Druck in der Kammer 8 von 0,02 bar über der Umgebung wurden Filamente mit einem mittleren Durchmesser d₅₀ von 4,1 µm erzeugt.

### Beispiel 3

Mit der Einrichtung aus Beispiel 1 wurde Polypropylen (PP) mit einem MFI von 25 (230°C, 2,16 kg) einem Düsenmundstück 3 mit 3 Bohrungen 4 im Abstand von 15 mm und einem Durchmesser von 1,0 mm zugeführt. Koaxial zu den 3 Bohrungen 4 waren in der Lavaldüsenplatte 3 einzelne rotationssymmetrische Lavaldüsen 6 angeordnet. Die Austrittsöffnungen der Bohrungen 4 waren genau in Höhe der Oberkante der Lavaldüsenplatte angeordnet und hatten einen Abstand von 4,5 mm von dem engsten Querschnitt der Lavaldüsen 6. Bei einem Druck in der Kammer 8 von 0,75 bar über der Umgebung 7 und einem Durchsatz pro Bohrung 4 von 9,3 g/min wurden Einzelfilamente mit einem mittleren Durchmesser d₅₀ von 4,9 µm hergestellt. Es ergibt sich in diesem Fall eine theoretische Fadenzahl von 123.

Von Interesse ist bei dieser Betriebsweise die Beobachtung, daß sich der Aufplatzpunkt im Vergleich zu Beispiel 1 deutlich in Richtung des engsten Querschnittes der Lavaldüsen 6 verschoben hat. Während sich im Fall der schlitzförmigen Lavaldüse 6 dieser Punkt etwa 25 mm unterhalb des engsten Querschnittes befindet, beträgt der Abstand im Fall der rotationssymmetrischen Lavaldüse 6 nur etwa 5 mm. Die Beobachtung wird damit erklärt, daß durch die rotationssymmetrische Umfassung des Schmelzefadens höhere Schubspannungen auf ihn übertragen wurden, er deshalb schneller auf den den Aufplatzpunkt ergebenden geringeren Durchmesser verzogen wird. Außerdem fällt der Druck im Freistrahl nach dem Verlassen der Lavaldüse 6 nicht schlagartig auf den Umgebungsdruck ab, sondern erst nach einer gewissen Lauflänge. Die Freistrahlcharakteristiken sind jedoch im ebenen Fall andere als im rotationssymmetrischen.

## Patentansprüche

1. Verfahren zur Herstellung von im Wesentlichen endlosen feinen Fäden aus schmelzbaren Polymeren, bei dem Polymerschmelze aus mindestens einer Spinnbohrung ausgesponnen und durch eine Lavaldüse geführt wird, wobei der ausgesponnene Faden durch mittels der Lavaldüse auf hohe Geschwindigkeit beschleunigte Gasströme verzogen wird, und wobei bei gegebener Geometrie der Schmelzebohrung und ihrer Lage zur Lavaldüse die Temperatur der Polymerschmelze, ihr Durchsatz pro Spinnbohrung und die die Geschwindigkeit der Gasströme bestimmenden Drücke vor und hinter der Lavaldüse so gesteuert werden, daß der Faden vor seinem Erstarren einen hydrostatischen Druck in seinem Inneren erreicht, der größer ist, als der ihn umgebende Gasdruck, derart, daß der Faden platzt und sich in eine Vielzahl feiner Fäden aufspleißt.

2. Verfahren nach Anspruch 1, **dadurch gekennzeichnet, daß** die Gasströmung um den mindestens einen Faden laminar ist.

3. Verfahren nach Anspruch 1 oder Anspruch 2, **dadurch gekennzeichnet, daß** der Raum hinter der Lavaldüse Umgebungsdruck aufweist oder bei Weiterverarbeitung der Fäden auf einem für die Weiterverarbeitung notwendigen Druck etwas über Umgebungsdruck liegt.

4. Verfahren nach einem der Ansprüche 1 bis 3, **dadurch gekennzeichnet, daß** die den Faden verziehende Gasströme Umgebungstemperatur oder eine aus ihrer Zufuhr bedingte Temperatur aufweisen.

5. Verfahren nach einem der Ansprüche 1 bis 4, **dadurch gekennzeichnet, daß** das Verhältnis der Drücke in dem Raum über und unter der Lavaldüse bei der Verwendung von Luft abhängig von dem Polymer, dessen Durchsatz und Schmelztemperatur zwischen 1,02 und 2,5 gewählt wird.

6. Verfahren nach einem der Ansprüche 1 bis 5, **dadurch gekennzeichnet, daß** der aus der Spinnbohrung austretende Faden im Bereich der Lavaldüse durch Strahlung beheizt wird.

7. Verfahren nach einem der Ansprüche 1 bis 6, **dadurch gekennzeichnet, daß** eine Vielzahl von Fäden ausgesponnen und aufgespleißt werden, die zu einem Vlies abgelegt oder zu Garnen weiterverarbeitet werden.

8. Vorrichtung zur Durchführung des Verfahrens nach einem der Ansprüche 1 bis 7 mit einem mit einer Zuführvorrichtung für die Schmelze verbundenen Spinnkopf, einer in dem Spinnkopf aufgenommenen und mindestens eine Spinnbohrung aufweisenden Spinndüsenanordnung, die ein Schmelzemonofil ausspinnt, einer unterhalb des Spinnkopfes (11) liegenden Platte (6'), die eine in fester geometrischer Zuordnung zu der Spinnbohrung (4) angeordnete Lavaldüse (6) aufweist, wobei zwischen Platte (6') und Spinnkopf (11) ein mit einer Zuführung von Gas (5) versehener geschlossener erster Raum (8) gebildet ist und unterhalb der Platte (6') ein zweiter Raum (7) vorgesehen ist und wobei der Durchsatz der Schmelze pro Spinnbohrung (4), die Temperatur der Schmelze sowie der Druck im ersten und zweiten Raum so eingestellt ist, daß das ausgesponnene und von der Strömung des Gases geförderte Schmelzemonofil nach Verlassen der Lavaldüse (6) vor seinem Erstarren einen hydrostatischen Druck erreicht der größer ist als der ihn umgebende Gasdruck, derart, daß der Faden platzt und sich in eine Vielzahl feiner Fäden aufspleißt.

9. Vorrichtung nach Anspruch 8, **dadurch gekennzeichnet, daß** die Spinnanordnung (3) gegen den ersten Raum (8) im Bereich der mindestens einen Spinnbohrung (4) durch eine Isolieranordnung (9) isoliert ist und/oder im Bereich der mindestens einen Spinnbohrung (4) beheizt ist.

10. Vorrichtung nach Anspruch 8 oder 9, **dadurch gekennzeichnet, daß** die Druckverhältnisse im ersten und zweiten Raum (8, 7) so eingestellt sind, daß die Gasströmung in der Lavaldüse (6) Geschwindigkeiten bis zur Schallgeschwindigkeit und darüber erreicht.

11. Vorrichtung nach einem der Ansprüche 8 bis 10, **dadurch gekennzeichnet, daß** der zweite Raum (7) auf Umgebungsdruck oder um einige mbar darüber liegt.

12. Vorrichtung nach einem der Ansprüche 8 bis 11, **dadurch gekennzeichnet, daß** das zugeführte Gas Umgebungstemperatur oder die Temperatur seiner Zuführvorrichtung aufweist.

13. Vorrichtung nach einem der Ansprüche 8 bis 12, **dadurch gekennzeichnet, daß** die Austrittsöffnung der mindestens einen Spinnbohrung (4) im Bereich der Lavaldüse (6) in der Höhe der Oberkante der Platte (6'), um einige mm über der Oberkante der Platte liegt oder einige mm in die Lavaldüse (6) hineinragt.

14. Vorrichtung nach einem der Ansprüche 8 bis 13, **dadurch gekennzeichnet, daß** die Spinndüsenanordnung eine Mehrzahl von gegebenenfalls mit Nippeln versehene Spinnbohrungen (4) aufweist, die eine Zeile oder mehrere parallel liegende Zeilen bilden.

15. Vorrichtung nach einem der Ansprüche 8 bis 14, **dadurch gekennzeichnet, daß** die Platte mindestens eine langgestreckte Lavaldüse aufweist.

16. Vorrichtung nach einem der Ansprüche 8 bis 14, **dadurch gekennzeichnet, daß** die Platte eine Mehrzahl von rotationssymmetrischen Lavaldüsen aufweist.

17. Vorrichtung nach einem der Ansprüche 8 bis 16, **dadurch gekennzeichnet, daß** ein Ablegeband zur Ablage der Fäden und Bildung eines Vlieses vorgesehen ist.

18. Vorrichtung nach einem der Ansprüche 8 bis 16, **dadurch gekennzeichnet, daß** eine Aufwickelvorrichtung zum Aufwickeln der Fäden vorgesehen ist.

19. Vlies hergestellt aus Fäden, die mit dem Verfahren nach einem der Ansprüche 1 bis 7 erzeugt wurden.

20. Garne hergestellt aus Fäden, die mit dem Verfahren nach einem der Ansprüche 1 bis 7 erzeugt wurden.

## Claims

1. Method for the manufacture of essentially endless fine threads from meltable polymers, in which polymer melt is spun from at least one spin hole and passed through a Laval nozzle, wherein the spun thread is drawn by gas streams accelerated to high speed by means of the Laval nozzle, and wherein with a given geometry of the melt hole and its position relative to the Laval nozzle the temperature of the polymer melt, its throughput per spin hole and the pressures in front of and behind the Laval nozzle which define the speed of the gas streams are controlled in such a way that the thread before solidification thereof attains a hydrostatic pressure in its interior which is greater than the gas pressure surrounding it, such that the thread bursts and splits into a plurality of fine threads.

2. Method according to claim 1, **characterised in that** the gas flow around the at least one thread is laminar.

3. Method according to claim 1 or claim 2, **characterised in that** the space behind the Laval nozzle is at ambient pressure or, in case of further processing of the threads, is at a pressure slightly above ambient pressure, which is necessary for further processing.

4. Method according to any of claims 1 to 3, **characterised in that** the gas streams which draw the thread are at ambient temperature or a temperature caused by their supply.

5. Method according to any of claims 1 to 4, **characterised in that** the ratio of the pressures in the space above and below the Laval nozzle when using air is selected between 1.02 and 2.5, depending on the polymer, its throughput and melting temperature.

6. Method according to any of claims 1 to 5, **characterised in that** the thread emerging from the spin hole is heated by radiation in the region of the Laval nozzle.

7. Method according to any of claims 1 to 6, **characterised in that** a plurality of threads are spun and split, which are deposited to form a non-woven fabric or further processed into yarns.

8. Apparatus for carrying out the method according to any of claims 1 to 7 with a spinning head connected to a feeder for the melt, a spinning nozzle assembly which is held in the spinning head and comprises at least one spin hole and which spins a melt monofilament, a plate (61) which is located below the spinning head (11) and which comprises a Laval nozzle (6) arranged in a fixed geometrical relationship to the spin hole (4), wherein between plate (61) and spinning head (11) is formed a closed first space (8) provided with a supply of gas (5) and below the plate (61) is provided a second space (7), and wherein the throughput of the melt per spin hole (4), the temperature of the melt and the pressure in the first and second spaces are adjusted in such a way that the spun melt monofilament carried by the flow of gas after leaving the Laval nozzle (6) before solidification thereof attains a hydrostatic pressure which is greater than the gas pressure surrounding it, such that the thread bursts and splits into a plurality of fine threads.

9. Apparatus according to claim 8, **characterised in that** the spinning assembly (3) is insulated from the first space (8) in the region of the at least one spin hole (4) by an insulating assembly (9) and/or is heated in the region of the at least one spin hole (4).

10. Apparatus according to claim 8 or 9, **characterised in that** the pressure ratios in the first and second spaces (8, 7) are adjusted in such a way that the gas flow in the Laval nozzle (6) attains speeds up to the speed of sound and over.

11. Apparatus according to any of claims 8 to 10, **characterised in that** the second space (7) is at ambient pressure or a few mbar over.

12. Apparatus according to any of claims 8 to 11, **characterised in that** the supplied gas is at ambient temperature or the temperature of its feeder.

13. Apparatus according to any of claims 8 to 12, **characterised in that** the outlet opening of the at least one spin hole (4) in the region of the Laval nozzle (6) is located at the level of the upper edge of the plate (61), a few mm above the upper edge of the plate, or extends a few mm into the Laval nozzle (6).

14. Apparatus according to any of claims 8 to 13, **characterised in that** the spinning nozzle assembly comprises a plurality of spin holes (4) which are if occasion arises provided with nipples and which form a row or several parallel rows.

15. Apparatus according to any of claims 8 to 14, **characterised in that** the plate comprises at least one elongate Laval nozzle.

16. Apparatus according to any of claims 8 to 14, **characterised in that** the plate comprises a plurality of rotationally symmetrical Laval nozzles.

17. Apparatus according to any of claims 8 to 16, **characterised in that** a delivery belt is provided for deposition of the threads and formation of a non-woven fabric.

18. Apparatus according to any of claims 8 to 16, **characterised in that** a winding device is provided for winding the threads.

19. Non-woven fabric made from threads which have been produced by the method according to any of claims 1 to 7.

20. Yarns made from threads which have been produced by the method according to any of claims 1 to 7.

## Revendications

1. Procédé de fabrication de filaments fins substantiellement ininterrompus à partir de polymères fusibles, dans lequel la fonte polymère est filée à partir d'au moins une filière et amenée à travers une tuyère de Laval, dans lequel le filament filé est déformé par des flux de gaz accélérés à haute vitesse au moyen de la tuyère de Laval, et dans lequel pour une géométrie donnée de l'orifice de fonte et de sa position par rapport à la tuyère de Laval, la température de la fonte polymère, son débit par filière et les pressions déterminant la vitesse des flux de gaz avant et après la tuyère de Laval sont commandés de telle sorte qu'avant sa solidification, le filament atteint une pression hydrostatique à son intérieur qui est supérieure à la pression de gaz ambiante, de telle sorte que le filament éclate et se divise en une pluralité de filaments fins.

2. Procédé selon la revendication 1, **caractérisé en ce que** le flux de gaz est laminaire autour dudit au moins un filament.

3. Procédé selon la revendication 1 ou 2, **caractérisé en ce que** l'espace en arrière la tuyère de Laval présente une pression ambiante, ou se trouve, en cas de transformation ultérieure des filaments, à une pression nécessaire à la transformation ultérieure, légèrement au-dessus de la pression ambiante.

4. Procédé selon l'une quelconque des revendications 1 à 3, **caractérisé en ce que** les flux de gaz déformant le filament présentent une température ambiante ou une température due à leur amenée.

5. Procédé selon l'une quelconque des revendications 1 à 4, **caractérisé en ce que** le rapport entre les pressions dans l'espace au-dessus et au-dessous de la tuyère de Laval, en cas d'utilisation d'air, est choisi entre 1,02 et 2,5 en fonction du polymère, de son débit et de la température de fusion.

6. Procédé selon l'une quelconque des revendications 1 à 5, **caractérisé en ce que** le filament sortant de la filière est chauffé par rayonnement au niveau de la tuyère de Laval.

7. Procédé selon l'une quelconque des revendications précédentes 1 à 6, **caractérisé en ce qu'**une pluralité de filaments sont filés et divisés qui sont déposés sous forme de non-tissé ou transformés en fils.

8. Dispositif de mise en oeuvre du procédé selon l'une quelconque des revendications 1 à 7, comprenant une tête de filage reliée à un dispositif d'amenée de fonte, un ensemble de tuyères de filage logée dans la tête de filage et présentant au moins une filière, l'ensemble filant un monofilament de fonte, une plaque (6') située au-dessous de la tête de filage (11) qui présente une tuyère de Laval (6) disposée dans une position géométrique fixe par rapport à la filière (4), dans lequel un premier espace (8) fermé muni d'une amenée de gaz (5) est formé entre la plaque (6') et la tête de filage (11) et un deuxième espace (7) est prévu au-dessous de la plaque (6'), et dans lequel le débit de la fonte pour chaque filière (4), la température de la fonte ainsi que la pression dans le premier et le deuxième espace sont réglés de telle sorte que le monofilament de fonte filé et transporté par le flux des gaz atteint avant sa solidification, après avoir quitté la tuyère de Laval (6) une pression hydrostatique qui est supérieure à la pression de gaz qui l'entoure, de telle sorte que le filament éclate et se divise en une pluralité de filaments fins.

9. Dispositif selon la revendication 8, **caractérisé en ce que** l'ensemble de filage (3) est isolé par rapport au premier espace (8) au niveau de ladite au moins une filière (4) par un ensemble d'isolation (9) et/ou chauffé au niveau de ladite au moins une filière (4).

10. Dispositif selon la revendication 8 ou 9, **caractérisé en ce que** les rapports de pression dans le premier et le deuxième espace (8, 7) sont réglés de telle sorte que le flux de gaz dans la tuyère de Laval (6) atteint des vitesses jusqu'à la vitesse du son et supérieures.

11. Dispositif selon l'une quelconque des revendications 8 à 10, **caractérisé en ce que** le deuxième espace (7) se trouve à pression ambiante ou à quelques mbar au-dessus de celle-ci.

12. Dispositif selon l'une quelconque des revendications 8 à 11, **caractérisé en ce que** le gaz amené présente une température ambiante ou la température de son dispositif d'amenée.

13. Dispositif selon l'une quelconque des revendications 8 à 12, **caractérisé en ce que** l'orifice de sortie de ladite au moins une filière (4) se trouve au niveau de la tuyère de Laval (6) à la hauteur du bord supérieur de la plaque (6'), de quelques mm au-dessus du bord supérieur de la plaque, ou fait saillie de quelques mm dans la tuyère de Laval (6).

14. Dispositif selon l'une quelconque des revendications 8 à 13, **caractérisé en ce que** l'ensemble de tuyères de filage présente une pluralité de filières (4) munies le cas échéant de raccords filetés, qui forment une rangée ou plusieurs rangées situées en parallèle.

15. Dispositif selon l'une quelconque des revendications 8 à 14, **caractérisé en ce que** la plaque présente au moins une tuyère de Laval allongée.

16. Dispositif selon l'une quelconque des revendications 8 à 14, **caractérisé en ce que** la plaque présente une pluralité de tuyères de Laval à symétrie de révolution.

17. Dispositif selon l'une quelconque des revendications 8 à 16, **caractérisé en ce qu'**une bande de dépôt est prévue pour déposer les filaments et former un non-tissé.

18. Dispositif selon l'une quelconque des revendications 8 à 16, **caractérisé en ce qu'**un dispositif d'enroulement est prévu pour enrouler les filaments.

19. Non-tissé fabriqué à partir de filaments qui ont été produits par le procédé selon l'une quelconque des revendications 1 à 7.

20. Fils fabriqués à partir de filaments qui ont été produits par le procédé selon l'une quelconque des revendications 1 à 7.
